# EUROPEAN PATENT SPECIFICATION

(11) **EP 2 210 778 B1**
(45) Date of publication and mention of the grant of the patent: **03.08.2011**
(21) Application number: 09425013.1
(22) Date of filing: 22.01.2009
(51) Int. Cl.: B60R 9/055, B60R 9/04

(54) **Luggage carrying container for motor-vehicles.**
Gepäckbehälter für ein Kraftfahrzeug
Conteneur pour bagage pour véhicule automobile

(43) Date of publication of application: 28.07.2010
(73) Proprietor: Fiat Group Automobiles S.p.A., 10135 Torino (TO) (IT)
(72) Inventor: Jansen, Peter, 10135 Torino (IT); Bisignano, Francesco, 10135 Torino (IT); Bussi, Vittorio, 10135 Torino (IT); Boetti, Daniela, 10135 Torino (IT)
(74) Representative: Notaro, Giancarlo

(56) References cited:
- EP-A- 1 535 779
- EP-A- 2 008 849
- WO-A-97/18973
- DE-A1- 2 542 384
- FR-A- 1 242 887
- GB-A- 378 711
- GB-A- 1 011 725

## Description

### Field of the invention

The present invention relates to luggage carrying devices for motor-vehicles, in particular for commercial vehicles such as vans and the like.

### Prior art

According to the prior art, aside from more conventional luggage carrying devices, in the form of a rack structure with feet that can be removably attached to the side edges of the roof of a motor-vehicle, luggage carrying devices in the form of single cross-bars each provided with respective feet for attachment to the edge of the roof are widespread. The arrangement of longitudinal bars over the two sides of the roof of the motor-vehicle already at the production factory is also widespread. Such longitudinal bars in turn provide support for the connection of luggage carrying cross-bars.

One of the principle disadvantages of all of the known solutions mentioned above is constituted by the low aerodynamic performance of the luggage carriers and of the consequent high level of noise that it generates when the motor-vehicle is in motion, particularly at high speeds.

Another disadvantage of such known solutions rests in the fact that the luggage carrying device, when mounted, causes a reduction not only of the aerodynamic characteristics, but also of the aesthetic characteristics of the motor-vehicle, with the consequence that the user generally prefers to remove the device when it is not in use and is therefore compelled to perform tedious mounting and dismantling operations before and after every use.

In addition the client never has a readily available article that allows the loading of cargo on the roof, but must resort to the purchase of several separate components (cross-bars, ladder-carrying rollers, tie-down belts).

All of the above said disadvantages remain and are often even greater in the case of recourse to the luggage carrier solutions that envision containers mounted on cross-bars. In this case the disadvantage of an elevated bulk, mainly in the vertical direction, is added to the disadvantages mentioned above, as well as the disadvantage that loading and unloading operations are in general rather inconvenient and uncomfortable, due to the relatively high height to which the luggage must be lifted. This is even more relevant if applied to professional use of the carry-all system, in that the operations of loading/unloading are part of daily work.

**A luggage carrying device as set forth in the preamble of claim 1 is known from** FR-A-1 242 887**.**

### Object of the invention

The object of the present invention is that of providing a luggage carrying device that can be arranged on the roof of the motor-vehicle, and in particular of a commercial vehicle, already from the vehicle producer and that the user can leave permanently in position, due to the fact that it does not cause a relevant decline of the aerodynamic characteristics of the motor-vehicle and in particular does not cause rustling or in general noisiness during the movement of the motor-vehicle.

Another object of the invention is that of realising a luggage carrying device that can be harmoniously integrated in the shape of the body of the motor-vehicle and that hence does not cause any decrease in the aesthetic characteristics of the body, but instead contributes to improving them both on aesthetic grounds and on functional grounds.

Another object of the invention it that of realising a luggage carrying device that is extremely efficient and convenient to use and that allows elevated flexibility and versatility concerning the various types of loads that can be transported, from the professional that requires the loading of ladders, tubes, beams to recreational use, which requires the loading of various types of material, such as skis, snowboards, surfboards, canoes or other.

### Summary of the invention

To achieve such objects, the invention has as its object a luggage carrying device for motor-vehicles according to claim 1.

In the invention, at least one between (but preferably both) the front wall and the rear wall of the container can be lowered to a position in which it does not protrude substantially above the bottom wall of the container, or is completely removable, to allow the loading of long luggage.

According to another preferred feature, the container is provided with a removable cover that closes from above and seals the luggage carrying cavity.

Other preferred characteristics of the invention form the object of the annexed dependent claims.

### Advantages of the invention

By means of the above-indicated characteristics, the luggage carrying container according to the invention is suitable to be integrated on the roof of a motor-vehicle already from the factory. The user does not perceive the device as an accessory added to the motor-vehicle, instead he considers it an integral part of the motor-vehicle. Such result is obtained by means of the fact that, once mounted, the device constitutes an extension of the body of the motor-vehicle and integrates into the global shape of the motor-vehicle.

The fact that the bottom wall of the container is in contact with and copies the shape of the roof of the motor-vehicle realises several advantages. The lack of a space between the lower surface of the container and the roof avoids, in the first place, rustling and noisiness that are one of the principle disadvantages of the known solutions.

The matching of shapes between the bottom wall of the container and the roof also contributes to the stability of the attachment.

In addition, the lack of a space between the container and the roof permits the designer to design the container so to harmoniously integrate into the general shape of the motor-vehicle.

Finally, the predisposition of the container in contact with the roof allows reduction to a minimum of the height to which luggage must be lifted to be loaded.

For all of the above-said reasons, the user has no interest or use in removing the luggage carrying container from the motor-vehicle, which allows the producer to predispose it already on the motor-vehicle from the factory, avoiding recourse to commercialisation as an after-market accessory.

Finally, the device according to the invention is suitable for being provided with a series of added particularities that also increase the flexibility and functionality of use, as will be evident in the following.

### Description of the figures

Other preferred characteristics and advantages of the invention will be clearer from the description that follows with reference to the annexed drawings, provided by way of non-limiting example only, wherein:
- figure 1 is a prospective view, partially exploded, of an embodiment of the luggage carrying container according to the invention, in the installed state on the roof of a motor-vehicle as it exits the production line,
- figure 2 is a prospective view showing the luggage carrying container in a position removed with respect to the roof of the motor-vehicle,
- figure 3 is a prospective view of a detail of the luggage carrier according to the invention, showing one of it's possible uses,
- figure 4 illustrates an enlargement of a detail of the luggage carrier in figure 3,
- figure 5 is an enlarged prospective view of another detail of the luggage carrier in figure 3,
- figure 6 is a view in cross-section of the luggage carrier in figure 3,
- figures 7, 8 are a view in cross-section and a view in longitudinal section showing an example of known connections used to attach the longitudinal bars to the roof of a motor-vehicle, such type of connection being also useable for attaching the luggage carrying container according to the invention to the roof,
- figures 9, 10 are prospective views illustrating the posterior wall of the luggage carrying container according to the invention in the condition of normal use and in the lowered condition,
- figures 11, 12 are prospective views showing the front wall of the luggage carrying container according to the invention in the condition of normal use and in the retracted condition,
- figure 13 is a prospective view showing the motor-vehicle with the luggage carrying container according to the invention wherein each of the walls front and rear are in the retracted condition, for the loading of long objects, such as, for example, a rung ladder,
- figure 14 is a prospective view illustrating the luggage carrying container according to the invention with a rung ladder mounted and secured above it,
- figure 15 is another enlarged prospective view of a detail of the luggage carrying container according to the invention,
- figure 16 is a view in longitudinal section of the of the luggage carrying container according to the invention showing another possible use of it,
- figure 17 is a prospective schematic view showing the condition of use illustrated in figure 16,
- figure 18 illustrates a variant of the luggage carrying container according to the invention that is provided with a top cover,

- figure 19 is a enlarged prospective view of the container with cover in figure 18,
- figure 20 is a prospective view showing the container in a partially open condition,
- figure 21 is a view in cross-section of the luggage carrying container according to the invention with the cover placed over it, and
- figure 22 is a prospective and enlarged figure of a detail of the luggage carrying container according to the invention in the variant wherein each side wall is used to integrate a light and wherein one of the two sides carries also an antenna for a GPS device.

### Detailed description of preferred embodiments of the invention

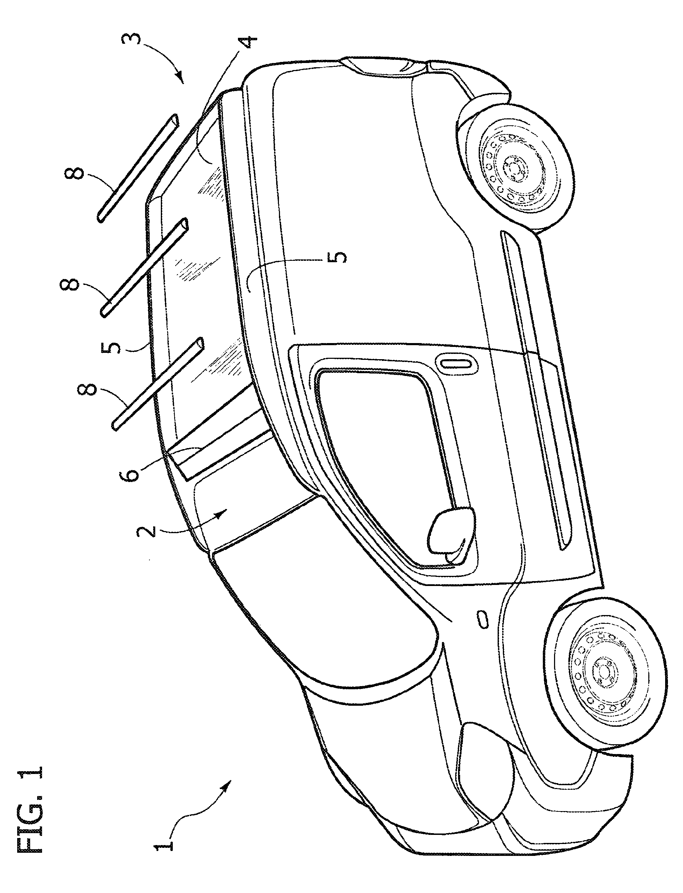

Figure 1 shows the application of the luggage carrying container according to the invention to a van or minivan. Naturally, it is evident that the luggage carrying container according to the invention is of general applicability and can be designed to be adapted to the roof of any type of automobile or commercial vehicle, as long as it has a rigid roof.

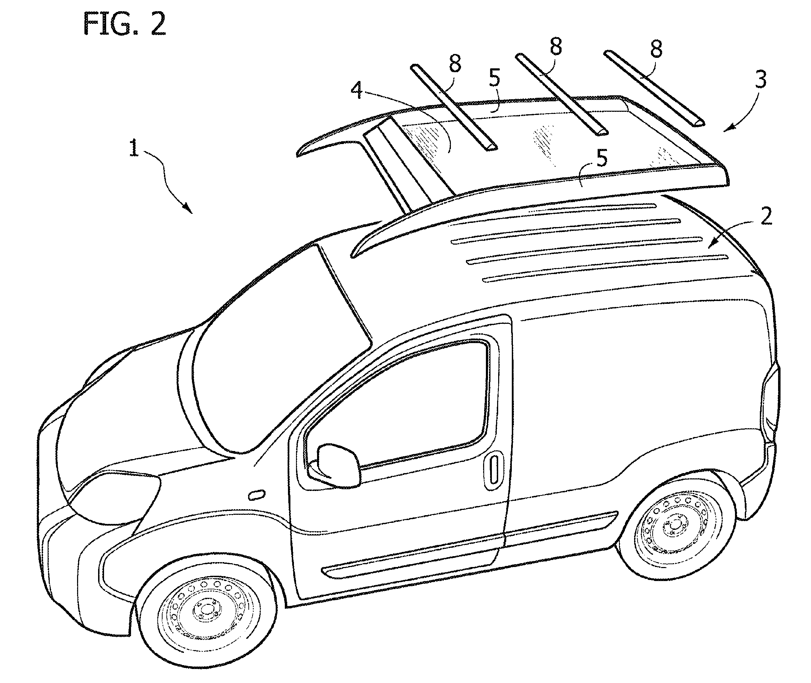

In the figure, the number 1 indicates the motor-vehicle in its entirety, on the roof 2 of which a luggage carrying container, indicated in its entirety with the number 3, is permanently installed, already from the factory. The luggage carrying container 3 covers a substantial part of the surface of the roof 2 of the motor-vehicle 1 and has a bottom wall 4, two longitudinal side walls 5, a front wall 6 and a back wall 7 defining a space open from above for containing luggage. In the structure of the luggage carrying container 3 are also integrated multiple luggage carrying bars 8 (illustrated in exploded view in figures 1, 2) that are oriented perpendicular to the longitudinal direction of the container 3 and on which the luggage can be placed.

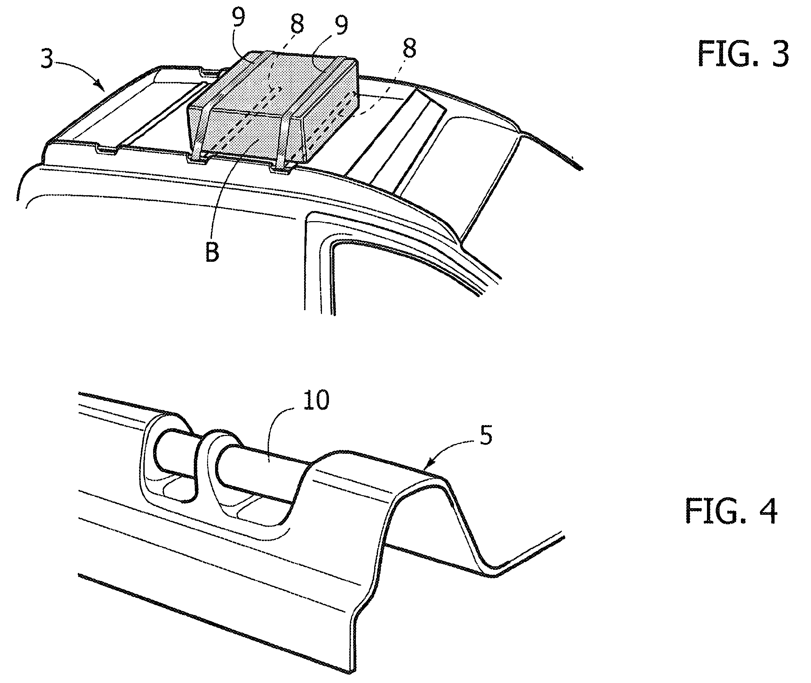

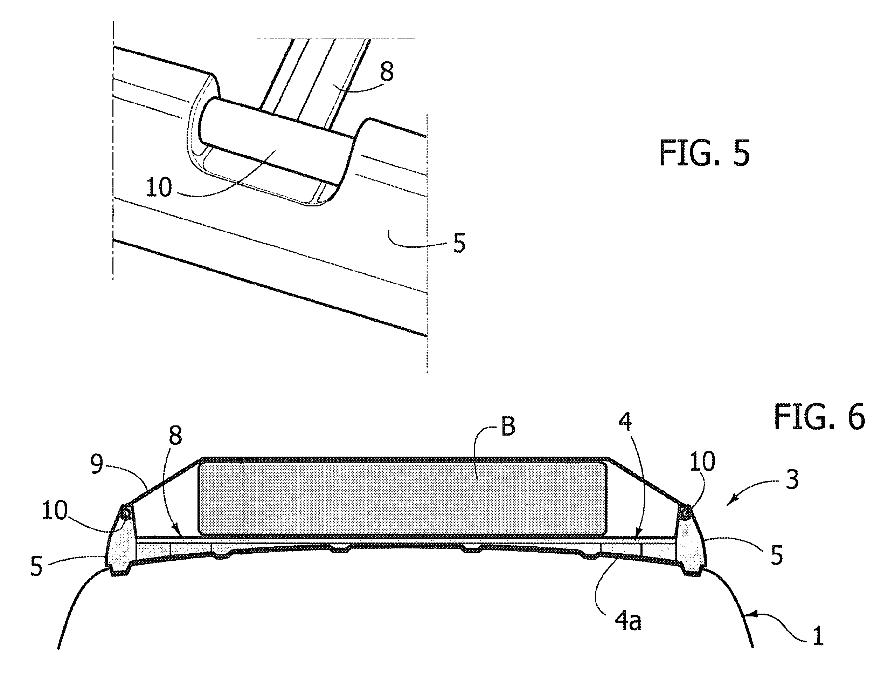

Figures 3, 6 show a first example of use of the luggage carrying container 3, wherein luggage B is resting on the cross-bars 8 and is secured with tie-down belts 9, the extremities of which are hooked to parts of the longitudinal bar 10 (figure 4) that are integrated into the side walls 5 of the luggage carrying container 3. Figure 6 clearly shows the cross-bars 8 resting on the bottom wall 4 of the luggage carrying container 3 and also shows that the above-said bottom wall 4 has an upper horizontal surface on which the cross-bars 8 rest and a lower shaped surface 4a that is in contact with the upper surface of the roof of the motor-vehicle 1 and that is shaped correspondingly to the shape of the roof.

Naturally, it is possible to envision connecting the cross-bars 8 to the bottom wall 4 and/or to the side walls 5 of the luggage carrying container such that it is possible to modify the position of each cross-bar 8 along the longitudinal direction of the motor-vehicle.

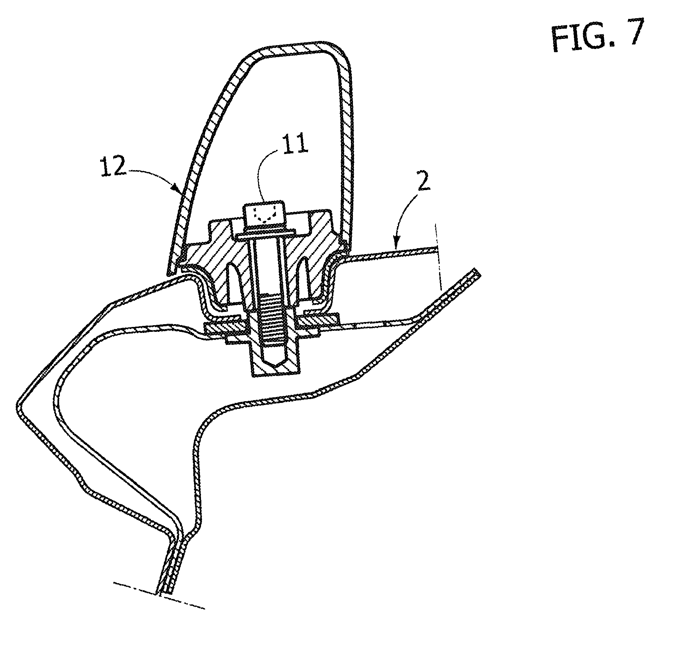

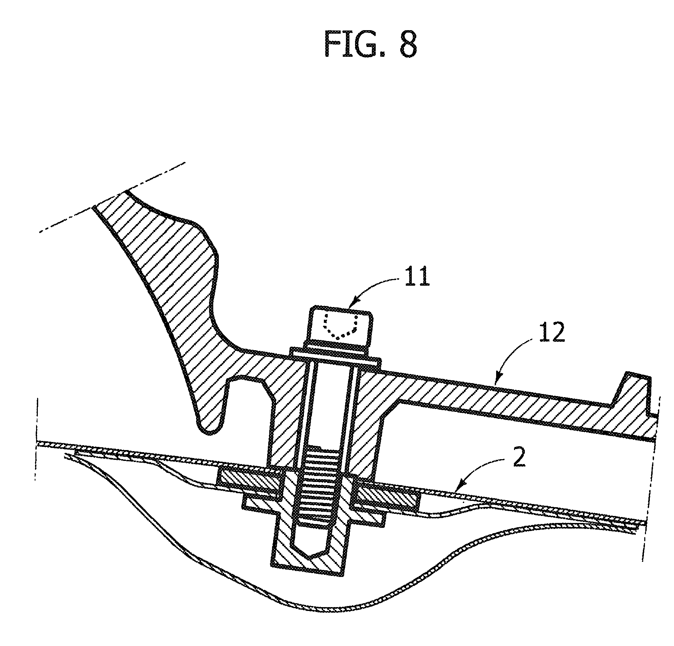

Figures 7, 8 show an example of connecting a longitudinal bar 12 to the sheet metal panels that form the structure of the roof 2 of a motor-vehicle, using a screw 11.

Figure 7 is a view in a plane transverse with respect to the longitudinal direction of the motor-vehicle, while figure 8 is a view in a vertical plane parallel to the longitudinal direction of the motor-vehicle. In the case of the invention, the structure of the luggage carrying container 3 is fixed to the structure of the roof 2 of the motor-vehicle through screw connections of the same type illustrated in figures 7, 8.

The structure of the luggage carrying container according to the invention can be realized in any suitable material, although the use of plastic material is preferred.

Naturally, the motor-vehicle producer can foresee the production of the motor-vehicle provided with the luggage carrying container according to the invention as an alternative to the production of a version of the motor-vehicle provided with traditional longitudinal bars. The screw connections of the type illustrated in figures 7, 8 allow the producer to easily predispose the two solutions as alternatives.

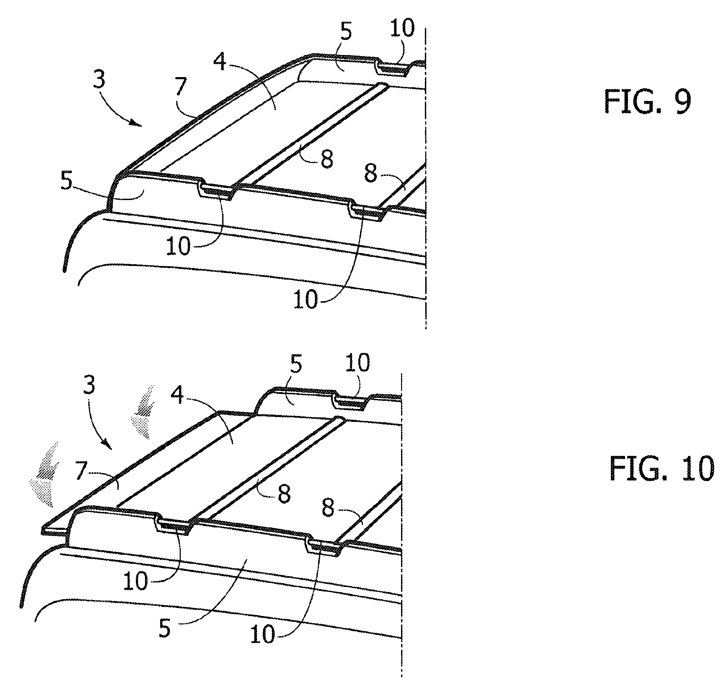

Figures 9, 10 show an embodiment of the luggage carrying container according to the invention wherein the rear wall 7 is connected in an articulated way to the structure of the bottom wall 4, such to be rotated from the position of normal use illustrated in figure 9 to the lowered position illustrated in figure 10, wherein the wall 7 does not protrude above the bottom wall 4, allowing in this way the loading of long luggage.

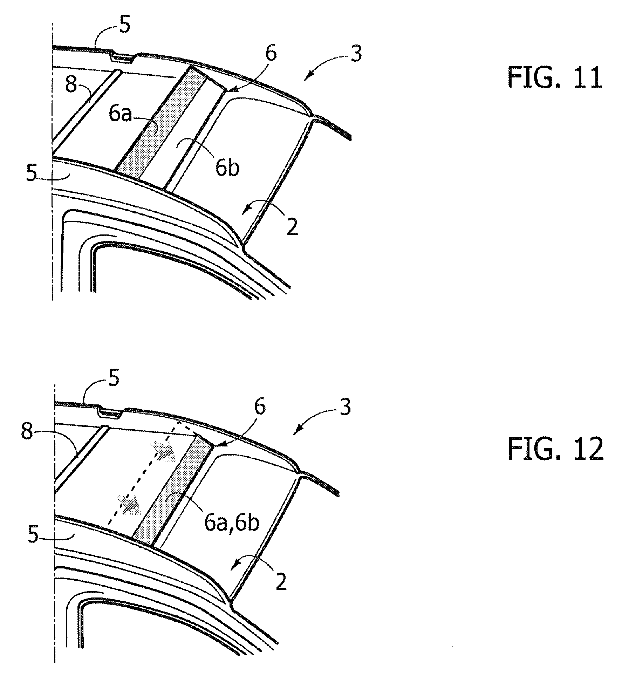

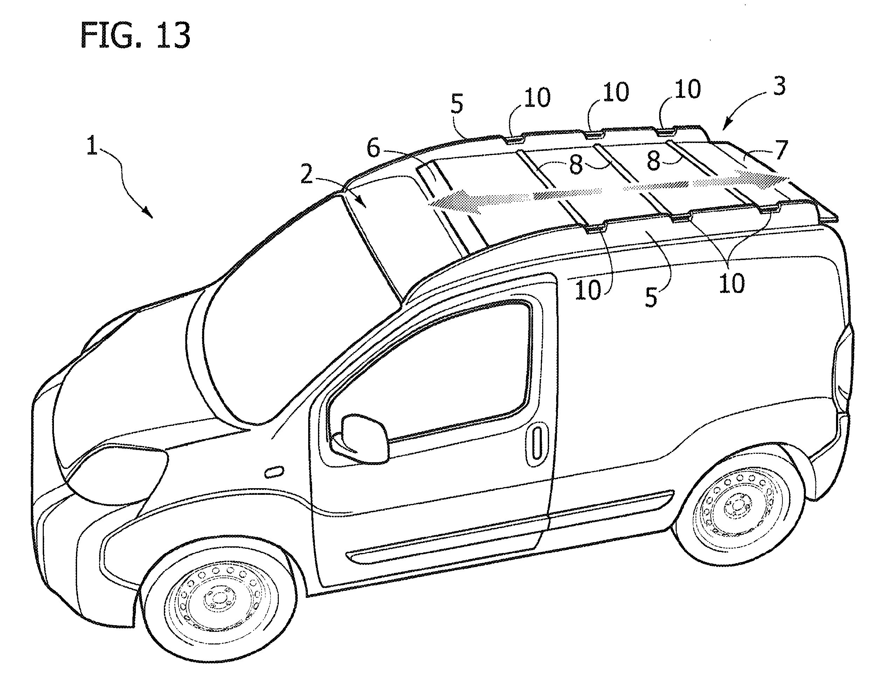

The same concept is also applied to the front wall 6, which in the case of the embodiment in figure 11, 13 has an upper fascia 6a lowerable by sliding to a position superimposed on a lower fascia 6b, thus allowing the loading of luggage that protrudes beyond the front edge of the luggage carrying container.

Alternatively, one or all of the walls 6, 7 could be realised completely removable.

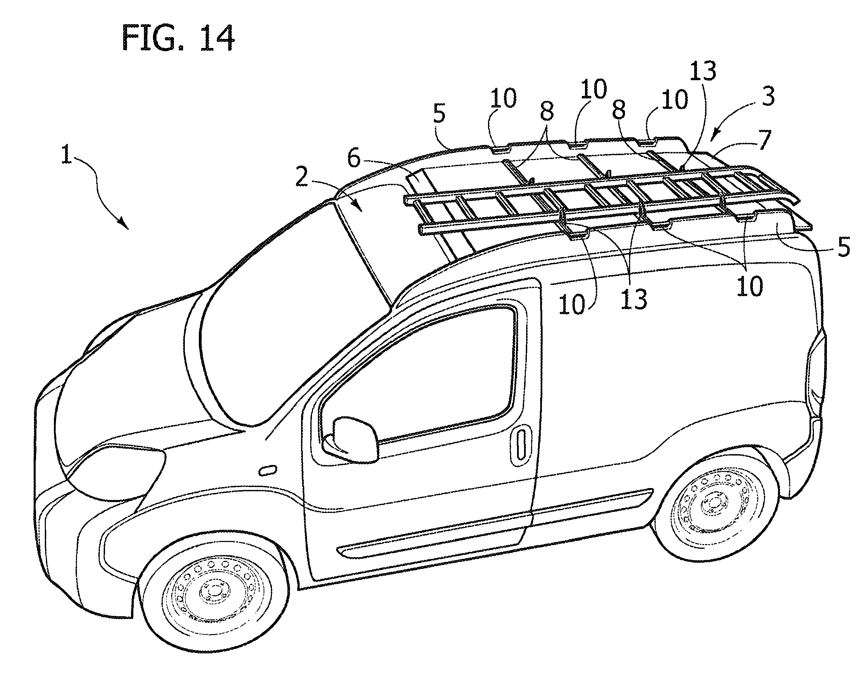

Figure 13 shows the luggage carrying container according to the invention with both the front and rear walls 6, 7 in the lowered condition, while figure 14 shows an example of use of the luggage carrying container, with the walls 6, 7 lowered, for loading, for example, of a rung ladder. The ladder is blocked in position over the cross-bars 8 using regulatable supports 13 of any known type, that can be moved and blocked along the cross-bars 8.

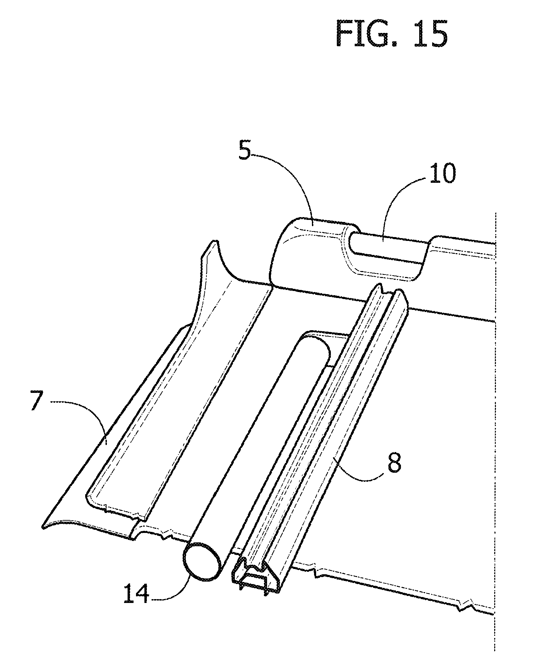

To favour the loading of long luggage, such as, for example, the case of a rung ladder, the cross-bar 8 adjacent to the collapsible rear wall 7 (figure 15) supports a freely rotatable roller 14, above which the luggage can be made to roll upon loading and unloading.

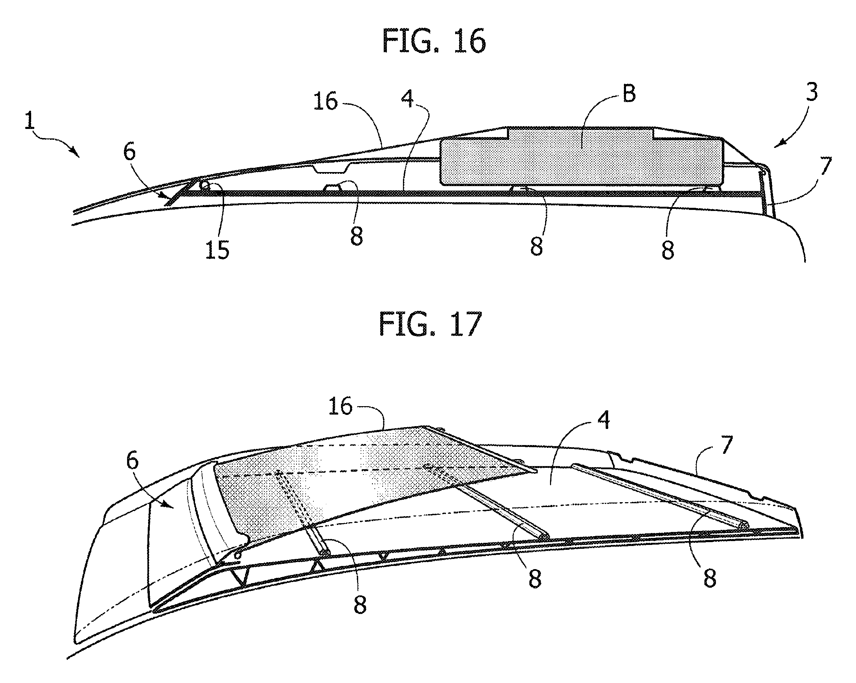

Figures 16, 17 show another embodiment wherein a roller is envisioned adjacent to the front wall 6 for the winding of a containment net 16 that may be manually unrolled from the roller 15, against the action of a return spring (not shown) that is associated with such roller. The free extremity of the net can be hooked to the rear wall 7 (figure 16) to secure luggage B resting on the cross-bar 8.

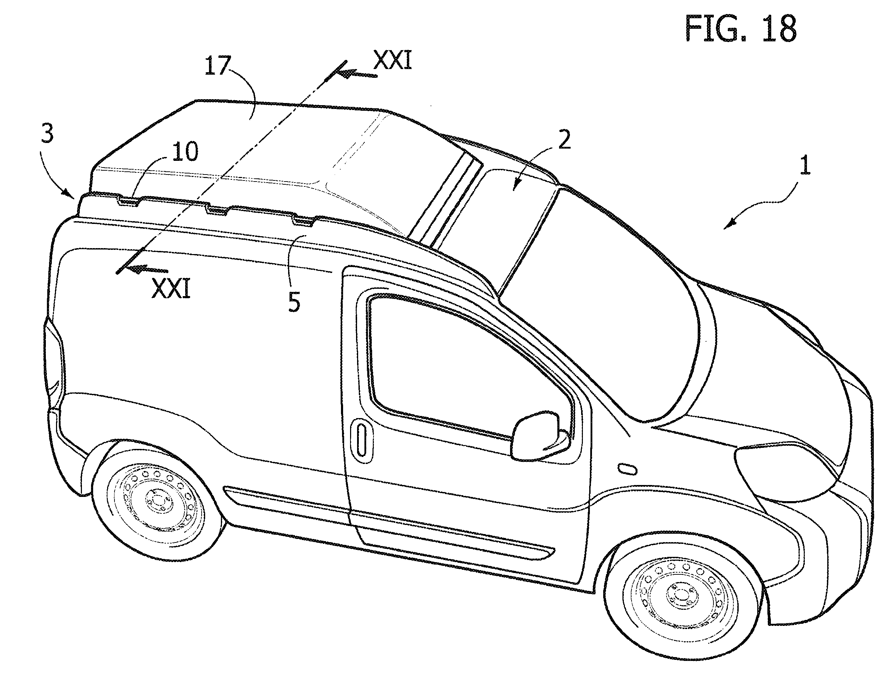

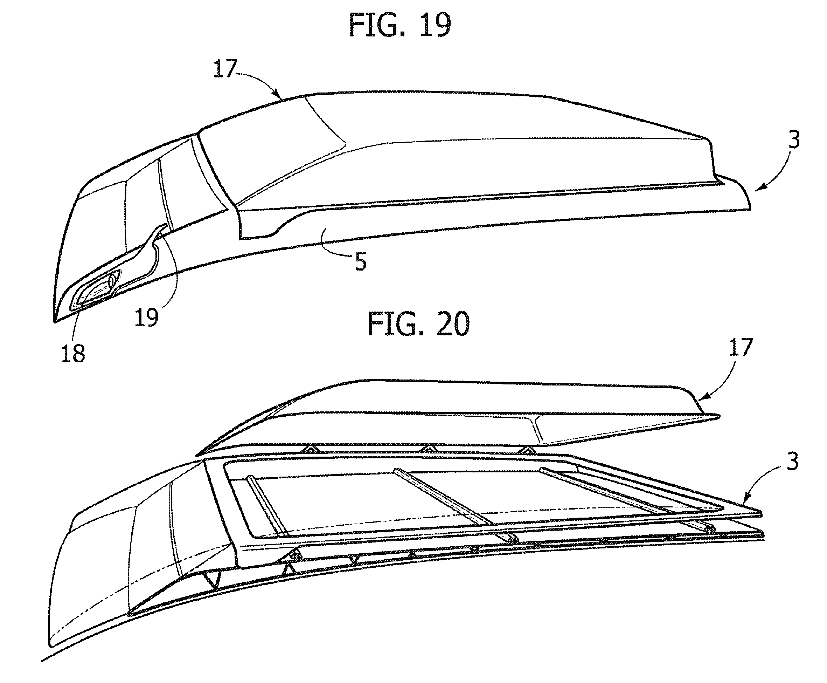

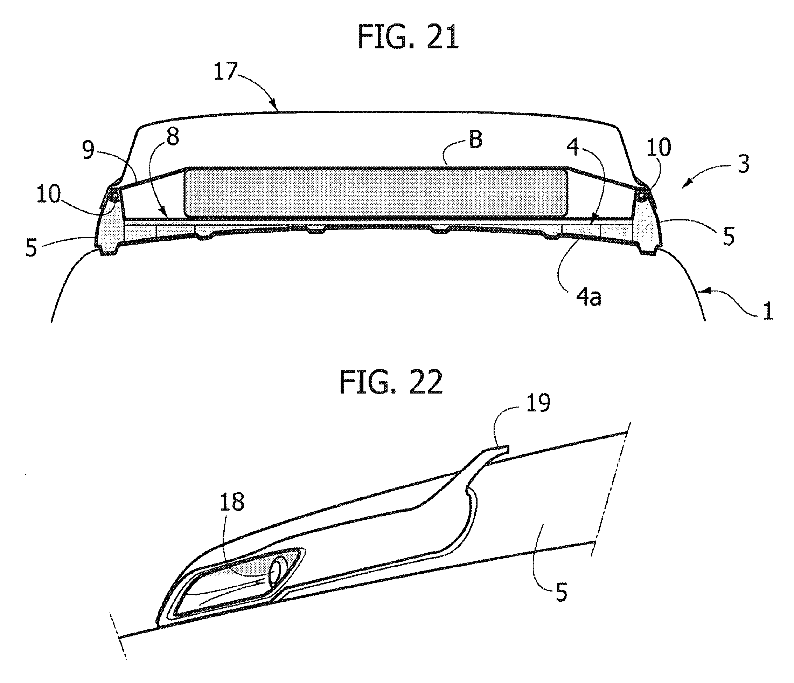

Figure 18 illustrates a version of the luggage carrying container according to the invention wherein a cover 17 is associated to the container, also preferably constituted in plastic material, that seals the cavity of the container from above (preferably with a sealing gasket). In the example illustrated, the cover 17 is articulated to a lateral wall 5 of the luggage carrying container 3 so to be openable laterally, as is illustrated in figure 20. Figure 21 shows a view in section along the line XXI-XXI in figure 18, with the cover 17 in the closed condition. As is illustrated in figure 19 and better seen in figure 22, in a preferred embodiment the frontal extremity of each side wall 5 of the luggage carrying container according to the invention has an integrated light 18. In addition, one of the walls 5 also functions as a support for an antenna 19 of a GPS device.

From the preceding description, it is clear that the characteristics of the luggage carrying container according to the invention make it suitable to be integrated in a motor-vehicle from the factory to constitute a permanent appendage of the body of the motor-vehicle, without causing any disadvantage from the point of view of the aerodynamic performance of the motor-vehicle or from the point of view of the generation of possible noises or rustlings when the motor-vehicle is in motion. On the contrary, the luggage carrying container according to the invention can allow the designer to harmoniously finish the shape of the body and/or to give it different features corresponding to various commercial versions of the motor-vehicle. On the other hand, the luggage carrying container according to the invention guarantees elevated functionality and flexibility of use and allows the user to perform the operations of loading and unloading with ease and comfort, also due to the reduced height of the loading deck with respect to the roof of the motor-vehicle.

Naturally, without prejudice to the underlying principle of the invention, the details of construction and the embodiments may vary widely with respect to what has been described and illustrated by way of example only, without departing from the scope of the present invention.

For example, one or both of the side walls 5 of the container can be realised movable to a lowered position or totally removable, to favour loading and unloading operations. The container can be provided with any known type of devices for blocking the luggage on the cross-bars 8. In general such devices are chosen to make the securing of luggage possible by the user after it has been loaded on the bars 8. Finally, the container can be provided with accessories of any known type to render it specifically suitable to the transportation of items of various types, in particular sports items such as skis, snowboards, canoes and surfboards.

## Claims

1. A luggage carrying device for motor-vehicles, constituted of a container (3) having a body provided with means for attachment on the roof of the motor-vehicle and having a bottom wall (4) with a lower surface in contact with the roof of the motor-vehicle and shaped so to follow the surface of the roof (2), said container also comprising a front wall (6), a rear wall (7) and two sidewalls (5) defining, with the bottom wall (4), an upwardly opened space for containing luggage, said container being adapted to cover a substantial part of the roof of the motor-vehicle, and also including a plurality of luggage carrying bars (8) associated with said bottom wall (4) and directed perpendicularly to the longitudinal direction of the container (3)
**characterised in that** at least one between said front wall (6) and said rear wall (7) can be lowered to a position where it does not protrude substantially above the bottom wall (4), to allow the loading of long luggage.

2. The luggage carrying container according to claim 1, **characterised in that** the above-said sidewalls (5) include elements (10) for the attachment of tie-down belts (9) or similar.

3. The luggage carrying container according to claim 1, **characterised in that** at least one between said front wall (6) and said rear wall (7) is removable, to allow the loading of long luggage.

4. The luggage carrying container according to claim 1, **characterised in that** said at least one lowerable wall (6) is mounted slidable between its position of normal use and its lowered position.

5. The luggage carrying container according to claim 1, **characterised in that** said at least one lowerable wall (7) is mounted oscillating between its position of normal use and its lowered position.

6. The luggage carrying container according to claim 1, **characterised in that** a freely rotatable roller (14) is arranged adjacent to said front wall (6) and/or to said rear wall (7) to favour the operations of loading and unloading luggage.

7. The luggage carrying container according to claim 1, **characterised in that** a winding roller (15) for a luggage (B) containment net (16) is arranged adjacent to one (6) of said walls (5, 6, 7), said net being provided with means for hooking to the wall of the luggage carrying container (3) situated on the side opposite to that of the winding roller (15).

8. The luggage carrying container according to any of the previous claims, **characterised in that** it comprises a cover (17) removably connected to the container body (3) to close from above and seal the cavity of the container (3).

9. The luggage carrying container according to claim 8, **characterised in that** said cover (17) is mounted articulated to one sidewall (5) of the luggage carrying container (3).

10. The luggage carrying container according to claim 1, **characterised in that** one or more lights (18) are integrated in the front part of the above-said luggage carrying container (3).

11. The luggage carrying container according to claim 1, **characterised in that** said container (3) supports an antenna, for example, an antenna for GPS or a radio antenna.

12. A vehicle, in particular a commercial vehicle, comprising a luggage carrying container according to any of the previous claims.

## Patentansprüche

1. Gepäckträgervorrichtung für Kraftfahrzeuge, bestehend aus einem Behälter (3), der einen Körper hat, der mit Einrichtungen zur Anbringung auf dem Dach des Kraftfahrzeugs versehen ist und eine Bodenwand (4) mit einer Unterseite hat, die das Dach des Kraftfahrzeugs berührt und derart beschaffen ist, dass sie der Oberfläche des Daches (2) folgt, wobei der Behälter zudem eine Vorderwand (6), eine Rückwand (7) und zwei Seitenwände (5) enthält, die mit der Bodenwand (4) einen nach oben geöffneten Raum zum Aufnehmen von Gepäck begrenzen, wobei der Behälter dazu eingerichtet ist, einen wesentlichen Teil des Daches des Kraftfahrzeugs zu bedecken, und zudem eine Vielzahl von Gepäckträgerstangen (8) enthält, die der Bodenwand (4) zugeordnet sind und senkrecht zur Längsrichtung des Behälters (3) weisen,
**dadurch gekennzeichnet, dass** die Vorderwand (6) und/oder die Rückwand (7) in eine Position abgesenkt werden kann/können, in der sie im wesentlichen nicht über die Bodenwand (4) herausragt/herausragen, um ein Laden von langem Gepäck zu ermöglichen.

2. Gepäckträgerbehälter nach Anspruch 1, **dadurch gekennzeichnet, dass** die oben erwähnten Seitenwände (5) Elemente (10) für die Anbringung von Spanngurten (9) oder Ähnlichem enthalten.

3. Gepäckträgerbehälter nach Anspruch 1, **dadurch gekennzeichnet**, das die Vorderwand (6) und/oder die Rückwand (7) lösbar ist/sind, um ein Laden von langem Gepäck zu ermöglichen.

4. Gepäckträgerbehälter nach Anspruch 1, **dadurch gekennzeichnet, dass** wenigstens eine absenkbare Wand (6) verschiebbar zwischen seiner Position der normalen Verwendung und seiner abgesenkten Position angebracht ist.

5. Gepäckträgerbehälter nach Anspruch 1, **dadurch gekennzeichnet, dass** die wenigstens eine absenkbare Wand (7) schwenkbar zwischen seine Position der normalen Verwendung und seiner abgesenkten Position angebracht ist.

6. Gepäckträgerbehälter nach Anspruch 1, **dadurch gekennzeichnet, dass** eine frei drehbare Walze (14) benachbart der Vorderwand (6) und/oder der Rückwand (7) angebracht ist, um die Vorgänge des Ladens und Entladens von Gepäck zu erleichtern.

7. Gepäckträgerbehälter nach Anspruch 1, **dadurch gekennzeichnet, dass** eine Wickelwalze (15) für ein Gepäck- (B) Netz (16) benachbart einer der Seitenwände (5, 6, 7) angeordnet ist, wobei das Netz mit Einrichtungen zum Einhaken an der Wand des Gepäckträgerbehälters (3) versehen ist, die sich auf der Seite befinden, die der Wickelwalze (15) gegenüberliegt.

8. Gepäckträgerbehälter nach einem der vorhergehenden Ansprüche, **dadurch gekennzeichnet, dass** er eine Abdeckung (17) enthält, die lösbar mit dem Behälterkörper (3) verbunden ist, um den Hohlraum des Behälters (3) von oben zu schließen und abzudichten.

9. Gepäckträgerbehälter nach Anspruch 8, **dadurch gekennzeichnet, dass** die Abdeckung (17) gelenkig an einer Seitenwand (5) des Gepäckträgerbehälters (3) angebracht ist.

10. Gepäckträgerbehälter nach Anspruch 1, **dadurch gekennzeichnet**, das wenigstens eine Leuchte (18) in den vorderen Teil des oben erwähnten Gepäckträgerbehälters (3) integriert ist.

11. Gepäckträgerbehälter nach Anspruch 1, **dadurch gekennzeichnet, dass** der Behälter (3) eine Antenne, wie etwa eine Antenne für GPS oder eine Radioantenne, hält.

12. Fahrzeug, insbesondere ein gewerbliches Fahrzeug, enthaltend einen Gepäckträgerbehälter nach einem der vorhergehenden Ansprüche.

## Revendications

1. Dispositif porte-bagages pour véhicules automobiles composé d'un conteneur (3) ayant un corps doté de moyens pour la fixation sur le toit du véhicule automobile et ayant une paroi inférieure (4) avec une surface inférieure en contact avec le toit du véhicule à moteur et formé afin de suivre la surface du toit (2), ledit conteneur comprenant également une paroi avant (6), une paroi arrière (7) et deux parois latérales (5) définissant, avec la paroi inférieure (4), un espace ouvert vers le haut pour contenir les bagages, ledit conteneur étant adapté pour couvrir une partie sensible du toit du véhicule à moteur, et comprenant également une pluralité de barres porte-bagages (8) associées à ladite paroi inférieure (4) et dirigées perpendiculairement à la direction longitudinale du conteneur (3),
**caractérisé en ce qu'**au moins l'une parmi ladite paroi avant (6) et ladite paroi arrière (7) peut être abaissée dans une position dans laquelle elle ne fait sensiblement pas saillie au-dessus de la paroi inférieure (4), pour permettre le chargement de bagages longs.

2. Conteneur porte-bagages selon la revendication 1, **caractérisé en ce que** les parois latérales (5) mentionnées ci-dessus comprennent des éléments (10) pour la fixation de sangles de retenue (9) ou similaires.

3. Conteneur porte-bagages selon la revendication 1, **caractérisé en ce qu'**au moins l'une parmi ladite paroi avant (6) et ladite paroi arrière (7) est amovible, pour permettre le chargement de bagages longs.

4. Conteneur porte-bagages selon la revendication 1, **caractérisé en ce que** ladite au moins une paroi abaissable (6) est montée de manière coulissante entre sa position d'utilisation normale et sa position abaissée.

5. Conteneur porte-bagages selon la revendication 1, **caractérisé en ce que** ladite au moins une paroi abaissable (7) est montée de manière oscillante entre sa position d'utilisation normale et sa position abaissée.

6. Conteneur porte-bagages selon la revendication 1, **caractérisé en ce qu'**un rouleau librement rotatif (14) est agencé de manière adjacente à ladite paroi avant (6) et/ou à ladite paroi arrière (7) afin de favoriser les opérations de chargement et de déchargement de bagages.

7. Conteneur porte-bagages selon la revendication 1, **caractérisé en ce qu'**un rouleau d'enroulement (15) pour un filet de confinement (16) de bagages (B) est agencé de manière adjacente à l'une (6) desdites parois (5, 6, 7), ledit filet étant prévu avec des moyens pour s'accrocher à la paroi du conteneur porte-bagages (3) située sur le côté opposé à celui du rouleau d'enroulement (15).

8. Conteneur porte-bagages selon l'une quelconque des revendications précédentes, **caractérisé en ce qu'**il comprend un couvercle (17) raccordé de manière amovible au corps de conteneur (3) afin de fermer depuis le dessus et de manière hermétique la cavité du conteneur (3).

9. Conteneur porte-bagages selon la revendication 8, **caractérisé en ce que** ledit couvercle (17) est monté de manière articulée sur une paroi latérale (5) du conteneur porte-bagages (3).

10. Conteneur porte-bagages selon la revendication 1, **caractérisé en ce qu'**une ou plusieurs lumières (18) sont intégrées dans la partie avant du conteneur porte-bagages (3) mentionné ci-dessus.

11. Conteneur porte-bagages selon la revendication 1, **caractérisé en ce que** ledit conteneur (3) supporte une antenne, par exemple, une antenne pour GPS ou une antenne radio.

12. Véhicule, en particulier, un véhicule commercial, comprenant un conteneur porte-bagages selon l'une quelconque des revendications précédentes.
